# EUROPEAN PATENT SPECIFICATION

(11) **EP 1 706 709 B1**
(45) Date of publication and mention of the grant of the patent: **02.09.2009**
(21) Application number: 04804452.3
(22) Date of filing: 30.12.2004
(51) Int. Cl.: G01D 5/14, G01D 5/16

(54) **POSITION SENSOR**
POSITIONSSENSOR
CAPTEUR DE POSITION

(30) Priority: 30.12.2003 EP 03030030; 30.12.2003 US 533276 P; 02.08.2004 US 598111 P; 23.09.2004 US 612562 P; 12.10.2004 US 617890 P; 09.11.2004 US 626359 P; 19.11.2004 US 629589 P
(43) Date of publication of application: 04.10.2006
(73) Proprietor: NCTEngineering GmbH, 82008 Unterhaching (DE)
(72) Inventor: MAY, Lutz, 82335 Berg (DE)
(74) Representative: Kopf, Korbinian Paul
(86) International application number: PCT/EP2004/014867
(87) International publication number: WO 2005/064281

(56) References cited:
- EP-A- 1 076 225
- WO-A-02/42713
- US-A1- 2002 100 649
- US-B1- 6 253 460
- US-B1- 6 581 480
- US-B1- 6 597 168

## Description

### Field of the Invention

The present invention relates to a position sensor device, a position sensor array, a concrete processing apparatus and a method for determining a position of a reciprocating object.

### Description of the Related Art

WO 02/42713 describes an angel measurement by a magnetic transducer. A magnetic field sensor is located in non-contacting relationship with a shaft and a region of the transducer, whereas the magnetic transducer region may be an integral portion of the shaft and may be located eccentrically with respect to the shaft. An angle dependent measurement of the magnetic field is provided with the help of the sensor, which is connected to a signal conditioning or processing circuitry.

US B1 6253 460 describes an apparatus for position measurement and a system and an method for using such an apparatus. The apparatus comprises one or more proximity sensors which may be located within a body of a hydraulic cylinder. The proximity sensors may be provided to measure linear displacement between the sensors and a tapered core within a piston element of the hydraulic cylinder, whereas the proximity sensor do not contact the shaft element. A change of the position of the shaft element modifies the distance between the magnetic core surface and the sensor, which in turn changes the magnetic flux of the magnetic core surface. This changes the output signal of the proximity sensor in proportion to the absolute linear displacement of the piston element.

EP A 1 076 225 describes a magnetic displacement detector with an angle sensor in which a magnetic displacement detecting device is installed and where the magnetic displacement member comprises a detection member, a magnet a Hall element and a rotor. Thereby a rotational operation of the rotor is converted into a linear operation of the detection member and a displacement of the linear operation at that time is detected by the Hall element.

US B1 6 597 168 describes a less current consuming non-contact type-two-channel rotary positioning sensor. This sensor can measure a magnitude of the magnetism caused by the rotation of a rotating body by eliminating the imbalance of the magnetism that can be generated due to the eccentricity of the rotating body. This is done by sensing with two Hall elements the magnitude of magnetism detected by two sensing bars located in opposite places.

US 2002/100649 A1 describes a vehicle suspension damper with integral linear position sensor. The suspension damper, which is arranged between a wheel assembly and a body of a vehicle, includes a cylindrical reservoir tube with a piston mounted for reciprocating movement within the reservoir tube. The linear sensor detects the position of a magnetic portion which surrounds a piston rod of an annular rod guide assembly.

US B1 6581 480 describes a magnetising arrangement for a torque/force sensor. A shaft that has been magnetised over a portion or its entire length may be used in a torque sensor or a force sensor by sensing the change in the emanation of the magnetic flux from the magnetised part of the shaft. The amount of flux emanating from the shaft varies with the torque of force applied.

For many applications, it is desirable to accurately measure the position of a moving object. For instance, it is highly advantageous to know the position of a reciprocating object to accurately control the reciprocation in an efficient manner.

According to the prior art, an optical marker can be provided on a reciprocating object, and an optical measurement can be performed to estimate the position of the optical marker and thus a position of the reciprocating object. However, under critical circumstances and conditions such as a dirty environment, the optical marker may be covered by a layer of dirt and may become "invisible" for an optical detecting means.

Further, in case that the reciprocating object is located in a dirty environment, an optical marker can be abrased by friction between the reciprocating object and dirt particles.

Such a scenario of critical conditions is present, for instance, in the case of a concrete processing apparatus in which a reciprocating shaft mixes concrete and in which the position of the reciprocating shaft or work cylinder is desired to known to efficiently control the reciprocation cycle.

Alternatively, a mechanical marker, such as an engraving, can be used as a marker to detect the position or velocity of a reciprocating object. However, such an engraving structure may be filled or covered with dirt and is thus not appropriate to be implemented under critical and dirty conditions. A mechanical marker (engravings) may also present a challenge to maintain pneumatic or hydraulic sealing.

### Summary of the Invention

It is an object of the present invention to enable an accurate position detection of a reciprocating object capable of being used under critical conditions like a dirty environment.

This object may be achieved by providing a position sensor device, a position sensor array, a concrete processing apparatus and a method for determining a position of a reciprocating object according to the independent claims.

According to an exemplary embodiment of the invention, a position sensor device for determining a position of a reciprocating object is provided according to the subject matter of claim 1.

Further, a position sensor array is provided according to an exemplary embodiment of the invention, comprising a reciprocating object, and a position sensor device having the above-mentioned features for determining a position of the reciprocating object.

Moreover, a concrete processing apparatus is provided according to another exemplary embodiment of the invention, comprising a concrete processing chamber, a reciprocating shaft arranged in the concrete processing chamber adapted to reciprocate to mix concrete, and a position sensor device having the above-mentioned features adapted to determine a position of the reciprocating shaft.

Beyond this, a method for determining a position of a reciprocating object is provided according to an exemplary embodiment of the invention according to the subject matter of claim 38.

One idea of the invention may be seen in the aspect to enable accurate position detection of a reciprocating object, such as a reciprocating working cylinder of a concrete (or cement) processing apparatus, by providing a plurality of magnetically encoded regions on the reciprocating object. When the reciprocating object reciprocates, a magnetically encoded region passes-from time to time-an area of sensitivity/a sufficient close vicinity of a magnetic field detector so that a counter electromotive force may be generated in a magnetic coil as a magnetic field detector by which the presence of the magnetically encoded region can be detected. Since the position of the magnetically encoded regions on the reciprocating object is known or can be predetermined, the determining unit can derive from the detected signal the actual position of the reciprocating object. To determine the position of the reciprocating object from the detected signal, correlation information can be taken into account. Such correlation information can be pre-stored in a memory device coupled with the position determining unit and may correlate the presence of a particular signal of a particular magnetically encoded region with a corresponding position of the shaft. In other words, correlation information correlates a detected (electrical) signal with a position of the object.

"Position" in the context of this description particularly means the information that a particular region or point of the reciprocating object is located at a determined position at a particular point of time.

The fact that the magnetically encoded region is fixed on the reciprocating object means that it may be integrated as a part of the object or alternatively may be attached as an external element to the surface of the object.

Particularly, one or more magnetically encoded regions can be formed on different portions of a hydraulic work cylinder, wherein each of magnetic field detector(s) senses a detecting signal each time a magnetically encoded region traverses a sphere of sensitivity of the magnetic field detector. Thus, the position, the velocity, the acceleration, and so on, of the working cylinder can be estimated with high accuracy, wherein this information can be used to drive the cylinder in a controlled manner to optimize its function.

Since the detection principle of the invention is contactless, the detection is not disturbed by friction effects and does not require a dirt-free environment. Thus, the invention particularly may advantageously be applied in technical fields in which a dirty environment may occur, for instance as a position detecting apparatus for a reciprocating shaft in a concrete processing apparatus, in the field of oil boring, and in the field of mining.

Further, the magnetic position detecting principle of the invention can be manufactured with low effort, is easy to handle and can be applied to any existing shaft by magnetizing a part of the shaft using a method which will described in detail below (PCME, "Pulse-Current-Modulated Encoding"). For instance, many industrial steels used for shafts of an engine or a work cylinder can be magnetized to form a magnetically encoded region of the invention. The detection principle of the invention is very sensitive and provides a good signal to noise ratio.

The invention can be applied to reciprocating objects like a reciprocating shaft having a full scale measurement range for instance in the range of 1 millimetre to 1 meter, but which may be less than 1 millimetre, or which may be as much as 1 (or more) meters.

The invention particularly allows to identify certain (absolute) positions (or fix points) on a reciprocating object, like the position where a pump or generator has to be shut off (on-off function). This invention can also be used to make a precise measurement at a specific range on a reciprocating object (defining a linear position on an object).

While different types of linear positioning sensors (the concept of which differ fundamentally from the concept of the invention) exist in large quantities and that for a relative long time, this particular invention is particularly designed to function under harsh and abrasive conditions where most other technologies will fail.

An aspect of a PCME based linear position sensing technology according to an exemplary embodiment of the invention is that the magnetic pick-up device may be very small and therefore can be easily placed in small spaces, like inside of a sealing chamber in a pneumatic or hydraulic device.

Another benefit is that the magnetic field emanating from the permanent magnetic markers is relatively small and therefore will not attract metallic particles. A typical magnetic proximity sensor (like an automotive wheel-speed sensor) uses very strong magnetic field to function reliable. Therefore ferromagnetic particles will stick on the surface of such sensors which is why they cannot be used in dirty environments.

The technology of the invention may be also used, in the frame of a concrete processing apparatus, to control the hydraulic cylinder position of the crane arm that carries the mixed and still liquid concrete mass through a long and flexible pipe to a specific location at a building site.

The hydraulic cylinders need to be extended or contracted so that the height and position of the crane arm can be changed. The PCME magnetic markers are appropriate to identify the exact position at the cylinder and to detect vibrations or oscillations that are caused by the concrete pump and the pulsing semi-liquid mass in the flexible pipe.

When the crane arm is pulsing/vibrating to much then the pump has to change its operation to prevent a problem (crane arm is moving outside of the acceptable position tolerance).

Referring to the dependent claims, further exemplary embodiments of the invention will be described in the following.

In the following, exemplary embodiments of the position sensor device will be described. However, these embodiments also apply for the position sensor array, the concrete processing apparatus and the method for determining a position of a reciprocating object.

The magnetically encoded region of the position sensor device may be a permanent magnetic region. The term "permanent magnetic region" refers to a magnetized material which has a remaining magnetization also in the absence of an external magnetic field. Thus, "permanent magnetic materials include ferromagnetic materials, ferrimagnetic materials, or the like. The material of such a magnetic region may be a 3d-ferromagnetic material like iron, nickel or cobalt, or may be a rare earth material (4f-magnetism).

The magnetically encoded region may be a longitudinally magnetized region of the reciprocating object. Thus, the magnetizing direction of the magnetically encoded region may be oriented along the reciprocating direction of the reciprocating object. A method of manufacturing such a longitudinally magnetized region is disclosed, in a different context, in WO 02/063262 A1, and uses a separate magnetizing coil.

Alternatively, the magnetically encoded region may be a circumferentially magnetized region of the reciprocating object. Such a circumferentially magnetized region may particularly be adapted such that the at least one magnetically encoded region is formed by a first magnetic flow region oriented in a first direction and by a second magnetic flow region oriented in a second direction, wherein the first direction is opposite to the second direction.

Thus, the magnetically encoded region may be realized as two hollow cylinder-like structures which are oriented concentrically, wherein the magnetizing directions of the two concentrically arranged magnetic flow regions are for instance essentially perpendicular to one another. Such a magnetic structure can be manufactured by the PCME method described below in detail, i. e. by directly applying a magnetizing electrical current to the reciprocating object made of a magnetizable material. To produce the two opposing magnetizing flow portions, current pulses can be applied to the shaft.

Referring to the described embodiment, in a cross-sectional view of the reciprocating object, there may be a first (circular) magnetic flow having the first direction and a first radius and the second (circular) magnetic flow having the second direction and a second radius, wherein the first radius is larger than the second radius.

Alternatively, the at least one magnetically encoded region may be a (separate) magnetic element attached to the surface of the reciprocating object. Thus, an external element can be attached to the surface of the reciprocating object in order to form a magnetically encoded region. Such a magnetic element can be attached to the reciprocating object by adhered it (e.g. using glue), or may alternatively be fixed on the reciprocating shaft using the magnetic forces of the magnetic element.

Instead of attaching a magnetic object to the surface of the reciprocating object, it is also possible to use materials with different magnetic properties (one material has a higher, and the other a lower permeability, for example). The magnetic object can be attached from the outside of the shaft/cylinder or can be placed inside of the cylinder.

When using materials of different permeabilities, then an additional magnetic encoding of the shaft or cylinder is no longer necessary. An external magnetic source can be used (in conjunction with the magnetic pick-up device) to detect when the magnetic flux is changing as a consequence of the moving shaft.

Any of the magnetic field detectors may comprise a coil having a coil axis oriented essentially parallel to a reciprocating direction of the reciprocating object. Further, any of the magnetic field detectors may be realized by a coil having a coil axis oriented essentially perpendicular to a reciprocating direction of the reciprocating object. A coil being oriented with any other angle between coil axis and reciprocating direction is possible and falls under the scope of the invention. Alternatively to a coil in which the moving magnetically encoded region may induce an induction voltage by modulating the magnetic flow through the coil, a Hall-effect probe may be used as magnetic field detector making use of the Hall effect. Alternatively, a Giant Magnetic Resonance magnetic field sensor or a Magnetic Resonance magnetic field sensor may be used as a magnetic field detector. However, any other magnetic field detector may be used to detect the presence or absence of one of the magnetically encoded regions in a sufficient close vicinity to the respective magnetic field detector.

A plurality of magnetically encoded regions may be fixed on the reciprocating object. By providing a plurality of magnetically encoded regions, a number of fixed points on the reciprocating shaft are defined which may be detected separately so that the number of detection signals is increased. Consequently, the sensitivity and the accuracy of the position detection may be improved.

The plurality of magnetically encoded regions may be arranged on the reciprocating object at constant distances from one another. Thus, each time one of the magnetically encoded regions passes one of the magnetic field detectors, the reciprocating object has moved by a distance which equals the distance between the magnetically encoded regions. Thus, the position of the reciprocating shaft can be estimated in a time-dependent manner with high accuracy.

Alternatively, the plurality of magnetically encoded regions may be arranged on the reciprocating object at different distances from one another. For instance, the different distances may be selectively based on a linear function, on a logarithmic function or by a power function (for instance a power of two or of three). Thus, the time between the detection of subsequent signals by one of the magnetic field detectors follows the mathematical function according to which the magnetic encoding regions of the invention are separated from one another. This allows a unique assignment of the present position of the reciprocating object.

Such a mathematical function can be a positive (increasing) function or a negative (decreasing) function, meaning that the spacing can become larger from one to the next magnetic marker, or it can become smaller from one to the next.

The plurality of magnetically encoded regions may be arranged on the reciprocating object with constant dimensions. A constant dimension (e.g. constant width, constant thickness, etc.) yields signals of a constant length in time as detected by any of the magnetic field detectors. However, in a scenario in which the reciprocating object reciprocates with a non-constant velocity, the length of the signals will change, so that velocity and acceleration information can be determined from the length of the signal in time.

Alternatively, the plurality of magnetically encoded regions may be arranged on the reciprocating object with different dimensions. This, similar to the case of providing the magnetically encoded regions at different distances from one another, allows a unique assignment of the magnetically encoded region which presently passes one of the magnetic field detectors.

Thus, the magnetic markers can be either all of the same physical dimensions (same width) or they can be of different dimensions (like becoming larger one-after-each-other). In the same way the physical dimensions of the markers can be changed, so can be their signal strength. For example: The markers are all of the same physical dimensions and they are all placed one-after-each-other with the same spacing to each other. The difference from one marker to the next is that the signal amplitude (generated by the permanently stored magnetic field, inside the marker) is increasing from one marker to the next.

Different magnetically encoded regions may be provided made of different magnetic materials, and/or may be provided with different values of magnetization. According to this embodiment, the amplitude or strength of the individual detection signals are different for each of the magnetically encoded regions so that a unique assignment of a detection signal to one of the magnetically encoded regions, being the origin for such a signal, can be carried out.

The position sensor device according to the invention may comprise a plurality of magnetic field detectors. This further allows to refine the detection performance.

The plurality of magnetic field detectors may be arranged along the reciprocating object at constant distances from one another.

Alternatively, the plurality of magnetic field detectors may be arranged along the reciprocating object at different distances from another.

The different distances may be selected based on a linear function, a logarithmic function or a power function.

Such a mathematical function can be a positive (increasing) function or a negative (decreasing) function, meaning that the spacing can become larger from one to the next detector, or it can become smaller from one to the next.

The position sensor device according to the invention may comprise a plurality of magnetically encoded regions fixed on the reciprocating object and may comprise a plurality of magnetic field detectors.

The arrangement of the plurality of magnetically encoded regions along the reciprocating object may correspond to the arrangement of the plurality of magnetic field detectors. In other words, the arrangement of the magnetic encoded regions may be symmetrical and may thus correspond to the arrangement of the magnetic field detectors. In other words, in a reference position of the reciprocating object, a central axis of each of the magnetic field detectors may correspond to a central axis of a corresponding one of the magnetically encoded regions.

Alternatively, at least a part of the plurality of magnetic field detectors may be arranged displaced from an arrangement of a corresponding one of the plurality of magnetically encoded regions arranged along the reciprocating object. According to this embodiment, an asymmetric configuration and arrangement of magnetic field detectors with respect to corresponding magnetically encoded regions in a reference state of the reciprocating object is achieved. For example, a first magnetically encoded region may have its central axis aligned in accordance with a central axis of a corresponding magnetic field detector. For a second magnetically encoded region, in the reference state, the central axis may be displaced with respect to a central axis of a corresponding magnetic field detector, and so on. Such a geometric offset may be used to improve the performance of the position sensor device, since the signals occur in a timely shifted manner, thus increasing the amount of detection information and allowing to refine the position determination.

The number of magnetically encoded regions may differ from the number of magnetic field detectors. For example, there may be provided three magnetically encoded regions and four magnetic field detectors. Or, two magnetic field detectors may be provided for each of the magnetically encoded regions. Or, a plurality of magnetic field detectors may be provided for each of the magnetically encoded regions, wherein the number of magnetically field detectors for any of the magnetically encoded regions may differ for different magnetically encoded regions.

In the position sensor device, the reciprocating object can be a push-pull-rod in a gearbox of a vehicle. In an automatic automotive gearbox system, the position of the various tooth-wheels (gear-wheels) may be changed by push-pull-rods. The actual position of such a rod can be measured with the position sensor device.

In the following, exemplary embodiments of the position sensor array of the invention will be described. These embodiments apply also for the position sensor device, for the concrete processing apparatus and for the method of determining a position of a reciprocating object.

In the position sensor array, the reciprocating object may be a shaft. Such a shaft can be driven by an engine, and may be, for example, a hydraulically driven work cylinder of a concrete processing apparatus.

The magnetically encoding region may be provided along a part of the length of the reciprocating object. In other words, any of the magnetically encoded regions may extend along a portion of the reciprocating object in longitudinal direction, wherein another portion of the reciprocating object is free of a magnetically encoding region.

Alternatively, the magnetically encoded region may be provided along the entire length of the reciprocating object. According to this embodiment, the whole reciprocating object is magnetized.

The reciprocating object may be divided into a plurality of equally spaced segments, each segment comprising one magnetically encoded region, the magnetically encoded regions of the segments being arranged in an asymmetric manner. For instance, three segments may be provided, wherein the first segment has a magnetically encoded region in the first third of its length, the second segment has a magnetically encoded region in the middle third of its length and the third and last segment has the magnetically encoded region in the last third of its length. Such a configuration gradually increases the spacing between consecutive markers yielding a characteristic signal pattern allowing an accurate estimation of the reciprocating shaft position.

Further, a control unit may be provided in the position sensor array adapted to control the reciprocation of the reciprocating object based on the determined position of the reciprocating object which is provided to the control unit by the position sensor device. Thus, the output of the position sensor device, namely the present position of the reciprocating object, is provided to the control unit as feedback information. Based on this back coupling, the control unit can adjust a controlling signal for controlling the reciprocation of the reciprocating object to ensure a proper operation of the reciprocating object.

In the following, exemplary embodiments of the concrete processing apparatus will be described. These embodiments also apply to the position sensor device, the position sensor array and the method for determining a position of a reciprocating object.

In a concrete processing apparatus, a control unit may be provided adapted to control the reciprocation of the reciprocating shaft based on the position of the reciprocating shaft which is provided to the control unit by the position sensor device.

The concrete processing apparatus may further comprise a vehicle on which the concrete processing chamber, the reciprocating shaft and the position sensor device may be mounted. Thus, a mobile concrete processing apparatus provided on a vehicle is created which can be flexibly transported to a place of installation.

The concrete processing apparatus of the invention may further comprise a further reciprocation shaft arranged in the concrete processing chamber adapted to reciprocate to mix concrete material. The reciprocating shaft and the further reciprocating shaft are operable in a countercyclical manner. In other words, two reciprocating shafts or cylinders may be provided to mix concrete material, wherein the two reciprocating shafts move in opposite directions in each operation state. For instance, in a scenario in which the first reciprocation shaft moves in a forward direction, the second reciprocation shaft moves in the backwards direction, and vice versa. By taking this measure, an excellent mixture of the concrete in the concrete processing apparatus is achieved. In order to accurately control the mixing of the concrete by the two reciprocating shafts, it is necessary to control the motion of the reciprocating shafts on the basis of estimated position information generated by the position sensor device. Particularly, in an operation state of the reciprocating shafts, in which they change their motion direction, it is particularly important to control the operation of the reciprocating shafts, since the energy consumption in this state is particularly high.

In the following, further aspects of the invention will be described which fall under the scope of the invention.

An amplitude, an algebraic sign, and/or a slope of a detected signal can be used to derive direction information, i.e. to determine if the reciprocating object moves from a first direction to a second direction or from the second direction to the first direction. According to the invention, one signal or a plurality of signals may b e analyzed/evaluated to allow an unambiguous assignment of the detection signals to a position of the reciprocating object to be detected. The arrangement of the magnetic field detectors and of the magnetically encoded regions is for instance selected such that a signal sequence of the magnetic field detectors is unique with respect to a particular position of the reciprocating object.

The magnetic position detection principle of the invention, in contrast to optical or mechanical marker detection methods, is abrasion free and operates without errors even in a scenario in which critical conditions (like concrete powder or other kind of dirt) are present.

Further, the magnetic position detection principle of the invention can be used in a wide temperature range. The only physical restriction concerning the temperature range in which the magnetic detection principle of the invention may be implemented is the Currie temperature of the used magnetic material. Thus, the magnetic components of the system of the invention can be used - with a reciprocating object made of industrial steel - up to 400°C and more. A limiting factor for the maximum operation temperature of the system of the invention may be the temperature up to which an isolation of a coil as a magnetic field detector keeps intact. However, with available coils, a temperature of at least 210°C can be obtained. Thus, the system of the invention is very temperature stable. Since the detection principle of the invention is contactless, a cooling element can be provided in an environment in which very high temperatures are present. Such a cooling element can be a water cooling element, for instance.

The lengths of a reciprocating shaft for an implementation in a concrete processing apparatus may be 5 meters and more.

In principle, using one magnetic field detector, for instance one coil, is sufficient. However, in order to eliminate the influence of the magnetic field of the earth, two detection coils may be used with oppositely oriented coil axis, so that the influence of the earth magnetic field can be eliminated by considering the two signals of the two coils. The detection of the position can include counting the number of markers which pass one or more magnetic field detectors per time.

The above and other aspects, objects, features and advantages of the present invention will become apparent from the following description and the appended claim, taken in conjunction with the accompanying drawings in which like parts or elements are denoted by like reference numbers.

### Brief Description of the Drawings

The accompanying drawings, which are included to provide a further understanding of the invention and constitute a part of the specification illustrate embodiments of the invention.

In the drawings:
Fig. 68 shows a position sensor array according to a first embodiment of the invention.
Fig. 69 shows a position sensor array according to a second embodiment of the invention.
Fig. 70 shows a position sensor array according to a third embodiment of the invention.
**Fig.71** shows a position sensor array according to a forth embodiment of the invention.
**Fig.72** shows a position sensor array according to a fifth embodiment of the invention.
**Fig.73** shows a diagram illustrating a detection signal as detected by the magnet field detection coil of the position sensor array according to the forth embodiment of the invention.
**Fig.74** shows a position sensor array according to a sixth embodiment of the invention.
**Fig.75** shows a diagram illustrating a detection signal as detected by the magnet field detection coil of the position sensor array according to the sixth embodiment of the invention.
**Fig.76** shows a position sensor array according to a seventh embodiment of the invention.
**Fig.77** shows a concrete processing apparatus according to a first embodiment of the invention.
**Fig.78** shows a concrete processing apparatus according to a second embodiment of the invention.
**Fig.79** and **Fig.80** show schematic views illustrating a sequence of signals captured by three magnetic field detectors generated by six magnetic encoded regions provided on a reciprocating shaft of a position sensor array according to an eighth embodiment of the invention.
Fig. 81 and Fig. 82 show schematic views illustrating a sequence of signals captured by two magnetic field detectors generated by six magnetic encoded regions provided on a reciprocating shaft of a position sensor array according to a ninth embodiment of the invention.
Fig. 83 shows a schematic view illustrating a sequence of signals captured by one magnetic field detector generated by six magnetic encoded regions provided on a reciprocating shaft of a position sensor array according to a tenth embodiment of the invention.
Fig. 84 to Fig. 86 show hollow tubes as reciprocating objects with different embodiments for magnetic encoded regions arranged inside the hollow tube.
Fig. 87, Fig. 88 show a position sensor array according to an eleventh embodiment of the invention.

### Detailed Description of Exemplary Embodiments of the Invention

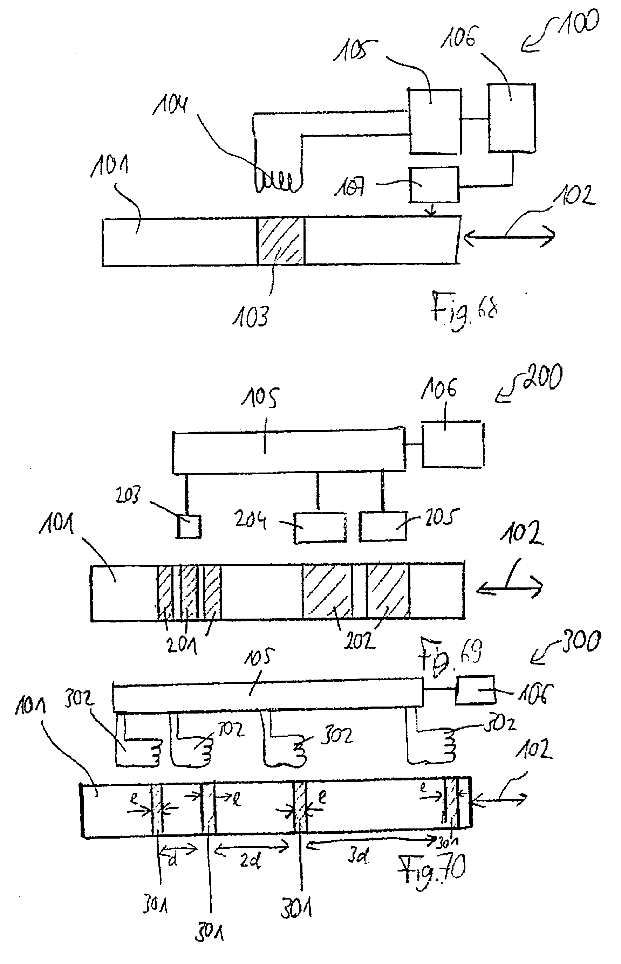

In the following, referring to Fig. 68, a position sensor array 100 according to a first embodiment will be described.

The position sensor array 100 comprises a reciprocating shaft 101 driven by a motor (not shown in Fig. 68), wherein the reciprocating shaft 101 reciprocates along a reciprocation direction 102. Further, the position sensor array 100 comprises a position sensor device for determining a position of the reciprocating shaft 101. The position sensor device for determining a position of the reciprocating shaft 101 comprises one magnetically encoded region 103 integrated in a surface region of the reciprocating shaft 101. Further, the position sensor device comprises one detection coil 104, a measuring unit 105 for measuring a magnetic field based on the electrical signals provided by the detection coil 104, and a determining unit 106. The detection coil 104 is adapted to detect a signal generated by the magnetically encoded region 103 when the magnetically encoded region 103 reciprocating with the reciprocating shaft 101 passes a surrounding area of the detection coil 104. In this surrounding area, a present magnetic element can be detected by the detection coil 104. The determining unit 106 is adapted to determine the position of the reciprocating shaft 10 based on the detected signal, which is measured by a measuring unit 105 coupled with the detection coil 104.

The magnetically encoded region 103 is realized according to the PCME technology described above. Therefore, the magnetically encoded region 103 is a permanent magnetic region having a circumferentially magnetized region of the reciprocating shaft 101 made from industrial steel. The magnetically encoded region 103 is formed by a first magnetic flow region oriented in a first direction and by a second magnetic flow region oriented in a second direction, wherein the first direction is opposite to the second direction. In a cross-sectional view of the cylindrical reciprocating shaft 101 perpendicular to the paper plane of Fig.68 and perpendicular to the reciprocating direction 102 of the reciprocating shaft 101, there is a first circular magnetic flow having the first direction and a first radius and the second circular magnetic flow having the second direction and a second radius, wherein the first radius is larger than the second radius.

When the reciprocating shaft 101, driven by an engine which is not shown in Fig.68, reciprocates along the reciprocation direction 102, i.e. oscillates along a direction 102 from left to right and vice versa, the magnetic flux through the detection coil 104 generated by the magnetically encoded region 103 varies with the time, since the magnetically encoded region 103 has a time dependent distance from the detection coil 104. Thus, depending on the actual position of the reciprocating shaft 101, the induced voltage in the detection coil 104 yielding a signal in the measuring unit 105, varies dependent of the actual position of the reciprocating shaft 101. Based on this measured signal, the determining unit 106 determines the actual position of the reciprocating shaft. The determining unit 106 provides this position information to the control unit 107 which uses this information to regulate control signals for controlling the reciprocation of the reciprocating shaft 101.

In the following, referring to **Fig.69****,** a position sensor array 200 according to a second embodiment of the invention will be described.

In contrast to the position sensor array 100, the position sensor array 200 comprises a plurality of magnetically encoded regions divided in a first group 201 of magnetically encoded regions and a second group 202 of magnetically encoded regions which are provided at different locations on the reciprocating shaft 101.

Instead of the detection coil 104, the position sensor array 200 comprises a first Hall-probe 203, a second Hall-probe 204 and third Hall-probe 205 arranged along the reciprocating shaft 101. When the reciprocating shaft 101 reciprocates along a reciprocation direction 102, the plurality of magnetically encoded regions 201, 202 pass the Hall-probes 203 to 205 to produce a significant and unique time dependent signal pattern detected by the Hall-probes 203 to 205 and measured by the measuring unit 105, so that the determining unit 106 can calculate the position of the reciprocating shaft 101 based on the sequence of signals.

Thus, the position sensor array 200 allows to sense the actual position of the reciprocating shaft 101 on the basis of the PCME technology in cascading sequence. The PCME encoding field group 201, 202 magnetically encoded regions have a different length along the reciprocation direction 102, whereby on one side of the reciprocating shaft 101 the shorter PCME encoding region 201 is placed and at the other end of the shaft 101 is the wider PCME encoding region 202.

The reciprocating shaft 101 is a hydraulic work cylinder. As can be seen from Fig.69, the short magnetic position markers 201 are cascaded, and the long magnetic position markers 202 are cascaded.

In the following, referring to **Fig.70**, a position sensor array 300 according to a third embodiment of the invention will be described.

The position sensor array 300 differs from the position sensor array 100 in that a plurality of equal-width magnetically encoded regions 301 are provided. Each of the magnetically encoded regions 301 has an equal width, 1, along the reciprocating shaft 101. The magnetically encoded regions 301 are provided at different distances from one another, namely a distances of d, 2d, and 3d. In contrast to the horizontally aligned detection coil 104 of Fig.68, Fig.70 shows a plurality of vertically aligned detection coils 302 having their coil axis arranged vertically according to the drawing of Fig.70. The different distances between adjacent magnetically encoded regions and adjacent detection coils 302 yield a time dependent pattern of signals generated in the detection coils 302 which allow to retrieve the actual position and velocity of the reciprocating shaft 101.

The arrangement of the coils 302 with respect to the magnetically encoded regions 301 is symmetric, i.e. in a reference state of the reciprocating shaft 101 shown in Fig.70, a central axis of each of the coils 302 equals to a central axis of a corresponding one of the magnetically encoded regions 301.

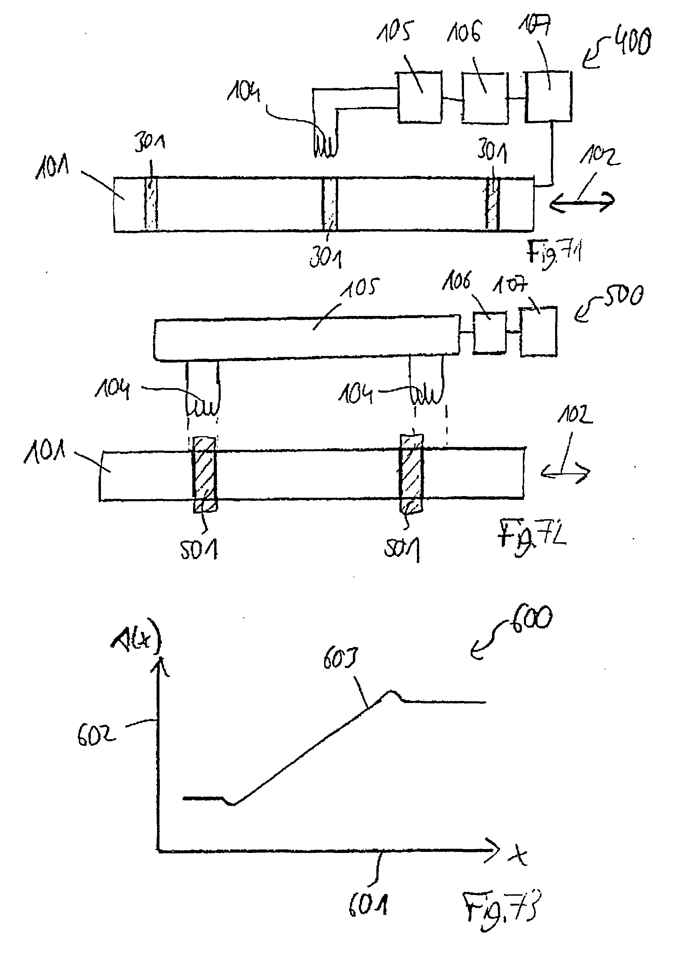

In the following, referring to **Fig.71****,** a position sensor array 400 according to a fourth embodiment of the invention will be described.

In the case of the position sensor array 400, a single horizontally aligned detection coil 104 is provided, and three equal-width magnetically encoded regions 301. When the shaft 101 reciprocates along direction 102, a detection signal is detected by the horizontally aligned detection coil 104 each time that one of the equal-width magnetically encoded regions 301 passes a close vicinity of the horizontally aligned detection coil 104. Thus, a sequence of signals is detected at the detection coil 104 which allows to recalculate the actual position of the shaft 101.

In the following, referring to **Fig.72****,** a position sensor array 500 according to a fifth embodiment of the invention will be described.

The position sensor array 500 includes two ferromagnetic rings 501 attached on different portions of the reciprocating shaft 101. These ferromagnetic rings 501 made of iron material are separate ferromagnetic elements which are attached on the reciprocating shaft 101 to form magnetically encoded regions. Further, two horizontally aligned detection coils 104 are provided to measure a time dependent magnetic field via an induction voltage which is generated in a respective one of the coils 104 when one of the ferromagnetic rings 501 passes one of the horizontally aligned detection coils 104. As can be seen from the reference position of the reciprocating shaft 101 shown in Fig.72, the ferromagnetic rings 501 are provided at positions of the shaft 101 which are non-symmetric with respect to the detection coils 104. In other words, in a configuration in which the position of the detection coil 104 shown on the left hand side of Fig.72 corresponds to the position of the ferromagnetic ring 501 shown on the left hand side of Fig.72, there is an offset between the position of the centre of the detecting coil 104 shown on the right hand side of Fig.72 and the position of the central axis of the ferromagnetic ring 501 shown on the right hand side of Fig.72. Consequently, the detection signals of the different coils 104 are timely shifted with respect to each other. Such a time offset yields further position information of the reciprocating shaft 101.

Referring to **Fig.73****,** a diagram 600 will be described showing a signal curve 603 which can be detected by the coils 104 shown in Fig.71 when one of the magnetically encoded regions 301 passes the respective coil 104. Along an abscissa 601 of diagram 600, the position x of the reciprocating shaft 101 is shown, and along an ordinate 602, a signal amplitude A(x) is shown. Thus, the signal curve 603 allows to determine the position of the reciprocating shaft 101.

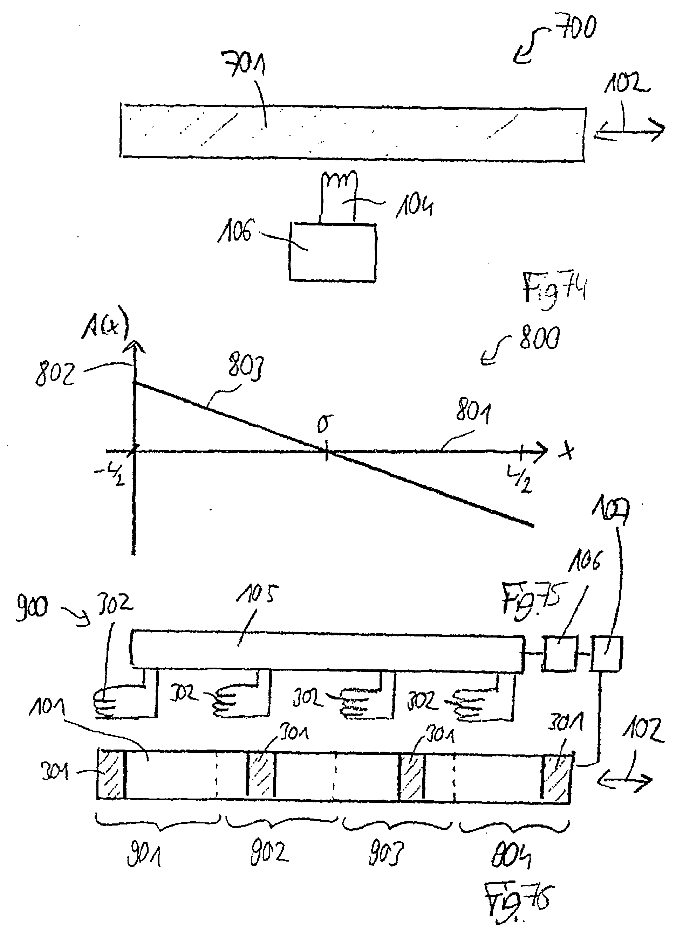

In the following, referring to **Fig.74****,** a position sensor array 700 according to a sixth embodiment of the invention will be described. In contrast to the position sensor array 100, the position sensor array 700 shows an entirely magnetized shaft 701, i.e. a shaft which is entirely made of ferromagnetic material or a shaft which is magnetized along its entire length according to the PCME technology.

**Fig.75** shows a diagram 800 having an abscissa 801 along which the position x of the entirely magnetized shaft 701 having a total length L is shown. Along an ordinate 802 of diagram 800, the amplitude A(x) of a signal detected by the determining unit 106 is shown. Thus, the signal of Fig.75 allows a unique identification of the actual position of the entirely magnetized shaft 701 of Fig.74.

In the following, referring to **Fig.76****,** a position sensor array 900 according to a seventh embodiment of the invention will be described.

In the case of the position sensor array 900, the reciprocating shaft 101 is divided into a plurality of equally spaced first to fourth segments 901 to 904. Each segment 901 to 904 comprises one magnetically encoded region 301, the magnetically encoded regions 301 being arranged in an asymmetric manner along the segments 901 to 904. The magnetically encoded region 301 of the first segment 901 is arranged in the very left part, the magnetically encoded region 301 of the second segment 902 is arranged in the middle-left part, the magnetically encoded region 301 of the third segment 903 is arranged in the middle-right part and the magnetically encoded region 301 of the fourth segment 904 is arranged at the very right part of the respective segment. Thus, the arrangement of the magnetically encoded regions 301 is shifted from segment to segment 901 to 904. This yields a unique signal pattern detectable by the coils 302 which allows an accurate estimation of the actual position of the shaft 101.

The equally spaced segments 901, 904 with different locations of the markers 301 allow an estimation of the position of the reciprocating shaft 101 by evaluating the signals detected by the coils 302.

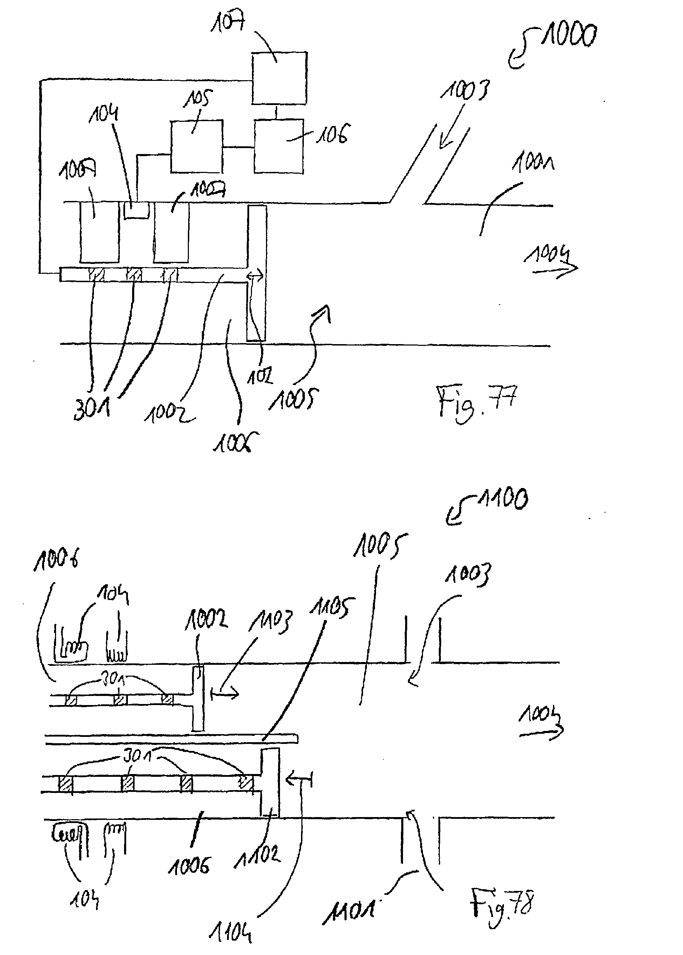

In the following, referring to **Fig.77****,** a concrete processing apparatus 1000 according to a first embodiment of the invention will be described.

The concrete processing apparatus 1000 is provided on a truck (not shown) equipped with a concrete mixer pump for mixing concrete material using a reciprocating shaft having the magnetic encoding of the invention. Thus, a concrete pump is equipped with a hydraulically driven work cylinder, i.e. a reciprocating shaft. In order to securely control the function of the reciprocating shaft, the position of the shaft should be known exactly. The invention provides a method of determining the exact position of the reciprocating cylinder of the concrete processing apparatus 1000.

Fig.77 shows the concrete processing apparatus 1000 having a concrete processing chamber 1001 which includes an inlet 1003 for supplying concrete material 1005 in the concrete processing chamber 1001. A reciprocating work cylinder 1002 mixes the concrete material 1005 by reciprocating along a reciprocation direction 102 and transports the concrete material 1005 to a concrete outlet 1004 connected to a pipeline (not shown) via which the concrete is supplied to a concrete consumer.

The reciprocating work cylinder 1002 has, on its reciprocating shaft, three magnetically encoded regions 301 manufactured according to the PCME technology. Sealing elements 1007 are provided to prevent an undesired mixture of concrete material 1005 with a hydraulic fluid 1006 provided to drive the reciprocating work cylinder 1002. When the magnetically encoded regions 301 pass a detection coil 104, an induction voltage is generated in the coil 104 which is supplied to the measuring unit 105 and which allows the determining unit 106 to estimate the present position of the reciprocating work cylinder 1002. A position indicating signal, in which the actual position of the cylinder 1002 is encoded, is provided to a control unit 107 which uses the position information to optimize a driving control signal to drive the reciprocating work cylinder 1002.

Thus, the invention improves the quality of the generated concrete 1005 and the operation of the reciprocating work cylinder 1002, by enabling an improved way of driving the work cylinder 1002 based on position information of the cylinder 1002.

In the following, referring to **Fig.78****,** a concrete processing apparatus 1100 according to a second embodiment of the invention will be described.

Fig.78 shows a twin cylinder pump arrangement having a first working cylinder 1002 and a second work cylinder 1102 which allows a combination of steady and gentle pumping patterns. Hydraulic oil 1006 is pumped under pressure to the working cylinders 1002, 1102. At one time, one of the working cylinders 1002, 1102 extends, while the other one retracts at the same time. Thus, one cylinder 1002, 1102 pumps and draws in concrete material 1005, and the other cylinder 1102, 1002 pumps concrete material 1005 into a connected pipeline (not shown). The assembly of Fig.78 is mounted on a truck to form a machine which is applicable in the construction and civil engineering fields.

In contrast to the concrete processing apparatus 1000, two instead of one work cylinders 1002, 1102 are provided in the case of the concrete processing apparatus 1100, namely the reciprocating work cylinder 1002 and a further reciprocating work cylinder 1102. Moreover, a further concrete inlet 1101 for supplying concrete material in a symmetric manner is provided. Both of the reciprocating work cylinders 1002, 1102 are hydraulically driven using the hydraulic fluid 1006.

According to the operation mode shown in Fig.78, the reciprocating work cylinder 1002 moves along a first direction 1103, whereas the further reciprocating work cylinder 1102 moves along a second direction 1104 which is opposite to the first direction 1103. A separation wall 1105 separates the reciprocating work cylinders 1002, 1102 from each other. Along the shaft of each of the reciprocating cylinders 1002, 1102, a plurality of magnetic encoded regions 301 are provided which produce magnetic signals on coils 104. Each reciprocating cylinder 1002, 1102 has assigned a pair of coils 104 having opposed coil axis, so that an evaluation of the signals generated in the coils 104 of each pair of coils allow to eliminate the influence of the magnetic field of the earth to further improve the accuracy of the detected positions.

In the following, further embodiments of the invention will be described which may or may not be realized with PCME technology.

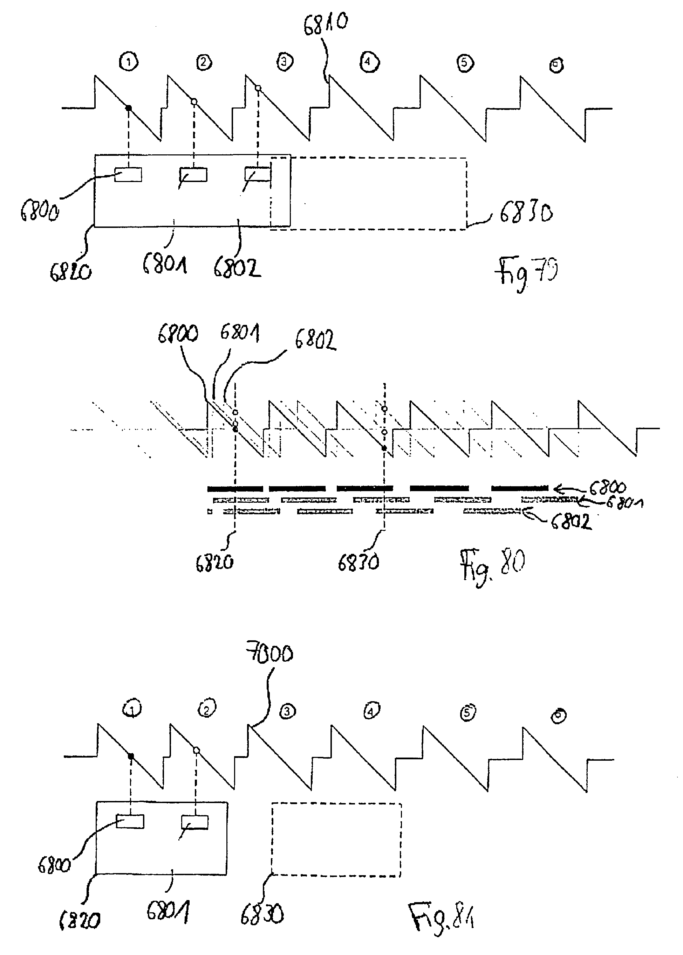

**Fig.79** and **Fig.80** show schematic views illustrating a sequence of signals 6810 captured by three magnetic field detectors 6800, 6801, 6802 generated by six magnetic encoded regions (see "1" to "6") provided with (from left to right) increasing distances from one another on a reciprocating shaft (not shown) of a position sensor array according to an eighth embodiment of the invention. A first pickup location 6820 and a second pickup location 6830 are shown. The six magnetic encoded regions (markers) have the same physical dimension (width of the markers is constant), but the location in relation to each other is changing.

As can be seen from Fig.80, when using three pickup modules 6800, 6801, 6802, then the usable axial-measurement range is much larger than in a scenario of using one or two pickup modules, since there are no "dead" areas (at least two pickup devices have a usable signal at any given location, at any point of time).

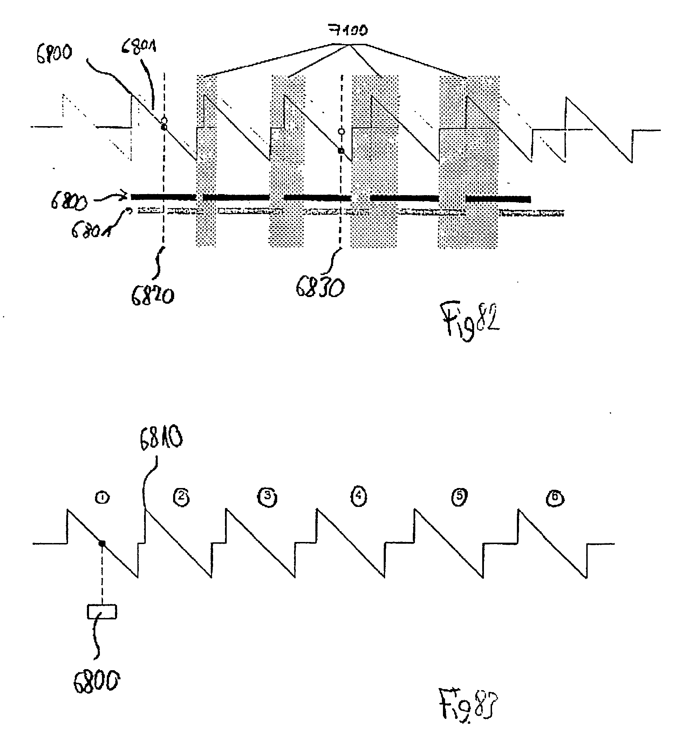

**Fig.81** and **Fig.82** show schematic views illustrating a sequence of signals 7000 captured by two magnetic field detectors 6800, 6801 generated by six magnetic encoded regions (see "1" to "6") provided with (from left to right) increasing distances from one another provided on a reciprocating shaft (not shown) of a position sensor array according to a ninth embodiment of the invention.

When using two pickup devices 6800, 6801, the axial measurement range expands considerably than when using only one pickup device. However, there are still "dead" areas 7100 between the markers where there is no sufficient information available through the pickup system. Apart from the "dead" areas 7100, the axial position can be determined accurately. Two pickups enable to determine accurately the axial position when two signals are present at any given location.

**Fig.83** shows a schematic view illustrating a sequence of signals 6810 captured by one magnetic field detector 6800 generated by six magnetic encoded regions (see "1" to "6") provided with (from left to right) increasing distances from one another provided on a reciprocating shaft (not shown) of a position sensor array according to a tenth embodiment of the invention. This embodiment allows to obtain axial position information with low effort.

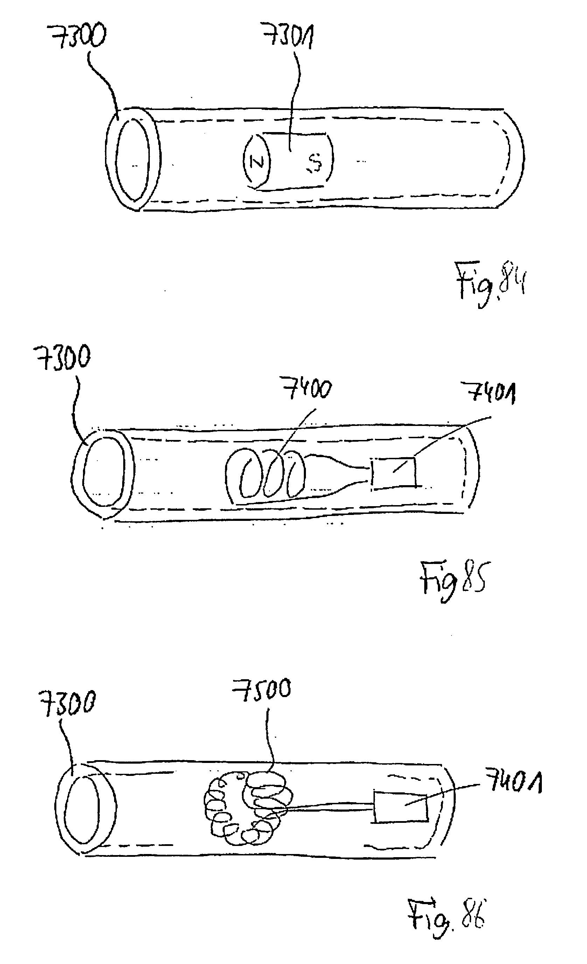

Fig. 84 to Fig.86 show a hollow tube 7300 as reciprocating object with different embodiments for magnetic encoded regions arranged inside the hollow tube. The magnetic field generated inside the tube 7300 has to be strong enough to penetrate the outer tube wall.

According to the embodiment shown in **Fig.84****,** a permanent magnet 7301 (synthetic magnet) is placed inside the tube.

According to the embodiment shown in **Fig.85****,** a coil 7400 (inductor) is placed inside the tube which can be magnetized by an electrical power source 7401.

According to the embodiment shown in **Fig.86****,** a helical coil 7500 is placed inside the tube which can be magnetized by an electrical power source 7401.

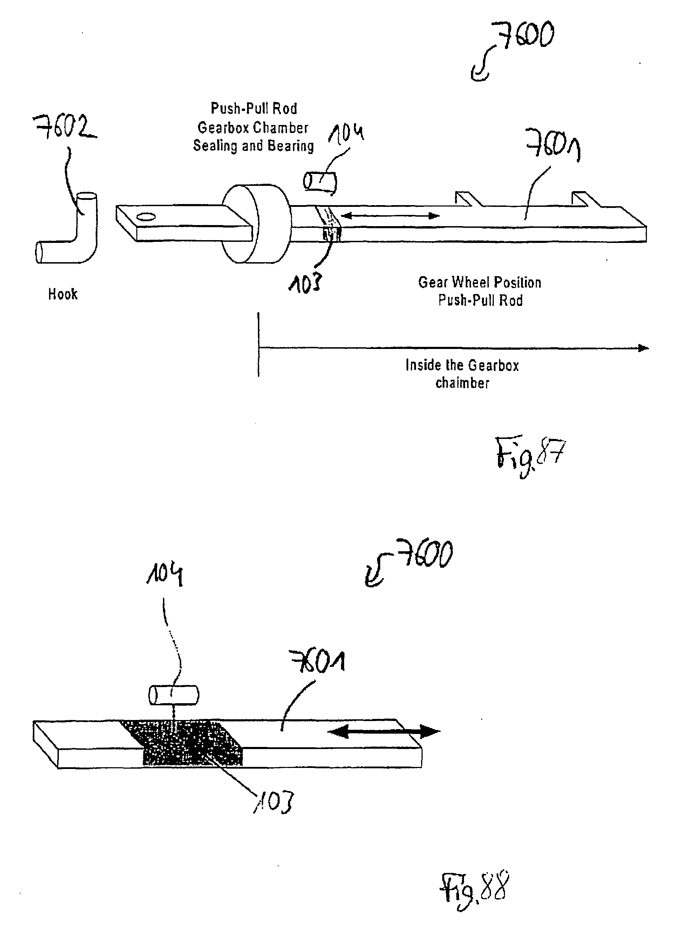

**Fig.87, Fig.88** show a position sensor array 7600 according to an eleventh embodiment of the invention.

In an automatic automotive gearbox system, as shown in Fig.87, Fig.88, the position of the various tooth-wheels (gear-wheels) are changed by push-pull-rods 7601. In a passenger car gearbox system may be particularly four or more push-pull-rods 7601 to control the gear positions of the cars transmission system. The push-pull-rods 7601 may be operated by an electric or pneumatic or hydraulic actuator. The actuators operate a hook 7602 which is inserted into a hole from the push-pull-rod 7601.

The push-pull-rod may 7601 move as little as +/-10 mm (passenger car gearbox) or much more (truck gearbox). The optimal operation of the gearbox requires that the push-pull-rods 7601 are moved to precise positions with little tolerances.

As the axial measurement range is relatively short (+/-10mm, up to +/-20mm) only one magnetic marker 103 is required for measuring the position of the push-pull-rod 7601. The magnetic marker 103 can be placed at any desired location of the push-pull-rod 7601 whereby the cross-section of the push-pull-rod 7601 where the marker 103 will be placed can be round, square, rectangle, or any other desired shape. As the push-pull-rod 7601 does not rotate, a non-uniform (non-round) shape of the rod's cross section is acceptable.

Fig.87 shows a typical gearbox push-pull-rod 7601 design, required to change the gear (tooth-wheel) position inside the gearbox by means of an externally placed actuator. The actuator is attached to the hook 7602 which is attached to the end of the push-pull-rod 7601.

Fig.88 shows a detailed view of the push-pull-rod 7601 with an magnetic marker encoding 103 and at least one magnetic field detecting device 104. The magnetic field detecting device 104 (example: coil) will detect the exact axial (linear) position of the push-pull-rod 7601 in relation to the position of the magnetic field detecting device 104.

It should be noted that the term "comprising" does not exclude other elements or steps and the "a" or "an" does not exclude a plurality. Also elements described in association with different embodiments may be combined.

## Claims

1. A position sensor device for determining a position of a reciprocating object (101), comprising: a plurality of magnetically encoded regions (301, 501) fixed on a reciprocating object (101); a plurality of magnetic field detectors (104), wherein at least a part of the plurality of magnetic field detectors (104) are arranged displaced from an arrangement of a corresponding one of the plurality of magnetically encoded regions arranged along the reciprocating object (101), so that detection signals of different detectors (104) are timely shifted with respect to each other; a position determining unit (106); wherein the magnetic field detectors (104) are adapted to detect a signal generated by the magnetically encoded regions (301, 501) when the magnetically encoded regions (301, 501) reciprocating with the reciprocating object (101) pass a surrounding area of the magnetic field detectors (104); wherein the position determining unit (106) is adapted to determine a position of a reciprocating object (101) based on the detected magnetic signal.

2. The position sensor device according to claim 1, wherein each magnetically encoded region (301, 501) is a permanent magnetic region.

3. The position sensor device according to claim 1 or 2, wherein each magnetically encoded region (301, 501) is a longitudinally magnetized region of the reciprocating object.

4. The position sensor device according to claim 1 or 2, wherein each magnetically encoded region (301, 501) is a circumferentially magnetized region of the reciprocating object.

5. The position sensor device according to any of claims 1, 2 or 4,
wherein each magnetically encoded region (301, 501) is formed by a first magnetic flow region oriented in a first direction and by a second magnetic flow region oriented in a second direction, wherein the first direction is opposite to the second direction.

6. The position sensor device according to claim 5, wherein, in a cross-sectional view of the reciprocating object (101), there is the first circular magnetic flow having the first direction and a first radius and the second circular magnetic flow having the second direction and a second radius, wherein the first radius is larger than the second radius.

7. The position sensor device according to claim 1, wherein each magnetically encoded region (301, 501) is manufactured in accordance with the following manufacturing steps: applying a first current pulse to a magnetizable element; wherein the first current pulse is applied such that there is a first current flow in a first direction along a longitudinal axis of the magnetizable element; wherein the first current pulse is such that the application of the current pulse generates a magnetically encoded region in the magnetizable element.

8. The position sensor device according to claim 7, wherein a second current pulse is applied to the magnetizable element; wherein the second current pulse is applied such that there is a second current flow in a second direction along the longitudinal axis of the magnetizable element.

9. The position sensor device according to claim 8, wherein each of the first and second current pulses has a raising edge and a falling edge; wherein the raising edge is steeper than the falling edge.

10. The position sensor device according to claim 8 or 9, wherein the first direction is opposite to the second direction.

11. The position sensor device according to one of claims 7 to 10, wherein the magnetizable element has a circumferential surface surrounding a core region of the magnetizable element; wherein the first current pulse is introduced into the magnetizable element at a first location at the circumferential surface such that there is the first current flow in the first direction in the core region of the magnetizable element; and wherein the first current pulse is discharged from the magnetizable element at a second location at the circumferential surface; wherein the second location is at a distance in the first direction from the first location.

12. The position sensor device according to one of claims 8 to 11, wherein the second current pulse is introduced into the magnetizable element at the second location at the circumferential surface such that there is the second current flow in the second direction in the core region of the magnetizable element; and wherein the second current pulse is discharged from the magnetizable element at the first location at the circumferential surface.

13. The position sensor device according to one of claims 7 to 12, wherein the first current pulse is not applied to the magnetizable element at an end face of the magnetizable element.

14. The position sensor device according to any of claims 1 to 13, wherein each magnetically encoded region (301, 501) is a magnetic element attached to the surface of the reciprocating object (101).

15. The position sensor device according to any of claims 1 to 14, wherein at least one magnetic field detector comprises at least one of the group consisting of a coil having a coil axis oriented essentially parallel to a reciprocating direction of the reciprocating object; a coil having a coil axis oriented essentially perpendicular to a reciprocating direction of the reciprocating object; a Hall-effect probe; a Giant Magnetic Resonance magnetic field sensor; and a Magnetic Resonance magnetic field sensor.

16. The position sensor device according to claim 15, wherein the plurality of magnetically encoded regions are arranged on the reciprocating object (101) at constant distances from one another.

17. The position sensor device according to claim 15, wherein the plurality of magnetically encoded regions are arranged on the reciprocating object (101) at different distances from one another.

18. The position sensor device according to claim 17,
wherein the different distances are selected based on a linear function, a logarithmic function or a power function.

19. The position sensor device according to any of claims 16 to 18, wherein the plurality of magnetically encoded regions are arranged on the reciprocating object (101) with constant dimensions.

20. The position sensor device according to any of claims 16 to 18, wherein the plurality of magnetically encoded regions are arranged on the reciprocating object (101) with different dimensions.

21. The position sensor device according to any of claims 16 to 20, wherein different magnetically encoded regions are provided of different magnetic materials.

22. The position sensor device according to any of claims 16 to 21, wherein different magnetically encoded regions are provided with different values of magnetization.

23. The position sensor device according to any of claims 1 to 22, wherein the plurality of magnetic field detectors are arranged along the reciprocating object (101) at constant distances from one another.

24. The position sensor device according to any of the claims 1 to 22, wherein the plurality of magnetic field detectors are arranged along the reciprocating object (101) at different distances from one another.

25. The position sensor device according to claim 24, wherein the different distances are selected based on a linear function, a logarithmic function or a power function.

26. The position sensor device according to any of claims 1 to 25, wherein the arrangement of the plurality of magnetically encoded regions along the reciprocating object (101) corresponds to the arrangement of the plurality of magnetic field detectors (203, 204, 205).

27. The position sensor device according to any of claims 1 to 26, wherein the number of the magnetically encoded regions equals the number of magnetic field detectors (203, 204, 205).

28. The position sensor device according to any of claims 1 to 26,
wherein the number of the magnetically encoded regions differs from the number of magnetic field detectors.

29. The position sensor device according to any of claims 1 to 28, wherein the reciprocating object (101) is a push-pull-rod in a gearbox of a vehicle.

30. A position sensor array, comprising a reciprocating object; and a position sensor device according to any of claims 1 to 29 for determining a position of the reciprocating object (101).

31. The position sensor array according to claim 30, wherein the reciprocating object (101) is a shaft.

32. The position sensor array according to any of claims 30 to 31, wherein the reciprocating object (101) is divided into a plurality of equally spaced segments, each segment comprising one magnetically encoded region, the magnetically encoded regions of the segments being arranged in an asymmetric manner.

33. The position sensor array according to any of claims 30 to 32, further comprising a control unit adapted to control the reciprocation of the reciprocating object based on the position of the reciprocating object which is provided to the control unit by the position sensor device.

34. A concrete processing apparatus, comprising a concrete processing chamber; a reciprocating shaft (101) arranged in the concrete processing chamber adapted to reciprocate to mix concrete; and a position sensor device according to any of claims 1 to 29 adapted to determine a position of the reciprocating shaft (101).

35. The concrete processing apparatus according to claim 34, further comprising a control unit adapted to control the reciprocation of the reciprocating shaft (101) based on the position of the reciprocating shaft (101) which is provided to the control unit by the position sensor device.

36. The concrete processing apparatus according to claim 34 or 35, further comprising a vehicle on which the concrete processing chamber, the reciprocating shaft (101) and the position sensor device are mounted.

37. The concrete processing apparatus according to any of claims 34 to 36, comprising a further reciprocating shaft arranged in the concrete processing chamber adapted to reciprocate to mix concrete; wherein the reciprocating shaft and the further reciprocating shaft are operable in a countercyclical manner.

38. A method for determining a position of a reciprocating object,
comprising the steps of detecting a signal by a plurality of magnetic field detectors (203, 204, 205) , the signal being generated by plurality of a magnetically encoded regions fixed on a reciprocating object, wherein at least a part of the plurality of magnetic field detectors (104) are arranged displaced from an arrangement of a corresponding one of the plurality of magnetically encoded regions arranged along the reciprocating object (101), so that detection signals of different detectors (104) are timely shifted with respect to each other when the magnetically encoded region reciprocating with the reciprocating object (101) passes a surrounding area of a magnetic field detector; determining a position of a reciprocating object (101) based on the detected signal.

## Patentansprüche

1. Positionssensorvorrichtung zum Bestimmen einer Position eines sich hin und her bewegenden Objekts (101), das Folgendes umfasst: mehrere magnetisch codierte Regionen (301, 501), die auf einem sich hin und her bewegenden Objekt (101) fixiert sind; mehrere Magnetfelddetektoren (104), wobei mindestens ein Teil der mehreren Magnetfelddetektoren (104) von einer Anordnung eines entsprechenden der mehreren magnetisch codierten Regionen, die entlang des sich hin und her bewegenden Objekts (101) angeordnet sind, versetzt angeordnet sind, so dass Detektionssignale verschiedener Detektoren (104) relativ zueinander zeitverschoben sind; eine Positionsbestimmungseinheit (106); wobei die Magnetfelddetektoren (104) dafür geeignet sind, ein durch die magnetisch codierten Regionen (301, 501) erzeugtes Signal zu detektieren, wenn die magnetisch codierten Regionen (301, 501), die sich mit dem sich hin und her bewegenden Objekt (101) hin und her bewegen, einen umgebenden Bereich der Magnetfelddetektoren (104) passieren; wobei die Positionsbestimmungseinheit (106) dafür geeignet ist, eine Position eines sich hin und her bewegenden Objekts (101) anhand des detektierten Magnetsignals zu bestimmen.

2. Positionssensorvorrichtung nach Anspruch 1, wobei jede magnetisch codierte Region (301, 501) eine dauermagnetische Region ist.

3. Positionssensorvorrichtung nach Anspruch 1 oder 2, wobei jede magnetisch codierte Region (301, 501) eine in Längsrichtung magnetisierte Region des sich hin und her bewegenden Objekts ist.

4. Positionssensorvorrichtung nach Anspruch 1 oder 2, wobei jede magnetisch codierte Region (301, 501) eine entlang des Umfangs magnetisierte Region des sich hin und her bewegenden Objekts ist.

5. Positionssensorvorrichtung nach einem der Ansprüche 1, 2 oder 4, wobei jede magnetisch codierte Region (301, 501) durch eine erste Magnetflussregion, die in einer ersten Richtung ausgerichtet ist, und durch eine zweite Magnetflussregion, die in einer zweiten Richtung ausgerichtet ist, gebildet wird, wobei die erste Richtung der zweiten Richtung entgegengesetzt ist.

6. Positionssensorvorrichtung nach Anspruch 5, wobei, in einer Querschnittsansicht des sich hin und her bewegenden Objekts (101), der erste kreisförmige Magnetfluss, der die erste Richtung und einen ersten Radius aufweist, und der zweite kreisförmige Magnetfluss, der die zweite Richtung und einen zweiten Radius aufweist, vorhanden sind, wobei der erste Radius größer ist als der zweite Radius.

7. Positionssensorvorrichtung nach Anspruch 1, wobei jede magnetisch codierte Region (301, 501) mit den folgenden Fertigungsschritten hergestellt wird: Anlegen eines ersten Stromimpulses an ein magnetisierbares Element; wobei der erste Stromimpuls so angelegt wird, dass ein erster Strom in einer ersten Richtung entlang einer Längsachse des magnetisierbaren Elements fließt; wobei der erste Stromimpuls eine solche Form hat, dass das Anlegen des Stromimpulses eine magnetisch codierte Region in dem magnetisierbaren Element erzeugt.

8. Positionssensorvorrichtung nach Anspruch 7, wobei ein zweiter Stromimpuls an das magnetisierbare Element angelegt wird; wobei der zweite Stromimpuls eine solche Form hat, dass ein zweiter Strom in einer zweiten Richtung entlang der Längsachse des magnetisierbaren Elements fließt.

9. Positionssensorvorrichtung nach Anspruch 8, wobei sowohl der erste als auch der zweite Stromimpuls eine ansteigende Flanke und eine abfallende Flanke hat; wobei die ansteigende Flanke steiler ist als die abfallende Flanke.

10. Positionssensorvorrichtung nach Anspruch 8 oder 9, wobei die erste Richtung der zweiten Richtung entgegengesetzt ist.

11. Positionssensorvorrichtung nach einem der Ansprüche 7 bis 10, wobei das magnetisierbare Element eine Umfangsfläche hat, die eine Kernregion des magnetisierbaren Elements umgibt; wobei der erste Stromimpuls in das magnetisierbare Element an einer ersten Stelle an der Umfangsfläche eingespeist wird, dergestalt, dass der erste Strom in der ersten Richtung in der Kernregion des magnetisierbaren Elements fließt; und wobei der erste Stromimpuls von dem magnetisierbaren Element an einer zweiten Stelle an der Umfangsfläche entladen wird; wobei die zweite Stelle in einer Entfernung in der ersten Richtung von der ersten Stelle angeordnet ist.

12. Positionssensorvorrichtung nach einem der Ansprüche 8 bis 11, wobei der zweite Stromimpuls in das magnetisierbare Element an einer zweiten Stelle an der Umfangsfläche eingespeist wird, dergestalt, dass der zweite Strom in der zweiten Richtung in der Kernregion des magnetisierbaren Elements fließt; und wobei der zweite Stromimpuls von dem magnetisierbaren Element an einer ersten Stelle an der Umfangsfläche entladen wird.

13. Positionssensorvorrichtung nach einem der Ansprüche 7 bis 12, wobei der erste Stromimpulses nicht an das magnetisierbare Element an einer Endfläche des magnetisierbaren Elements angelegt wird.

14. Positionssensorvorrichtung nach einem der Ansprüche 1 bis 13, wobei jede magnetisch codierte Region (301, 501) ein magnetisches Element ist, das an der Oberfläche des sich hin und her bewegenden Objekts (101) angebracht ist.

15. Positionssensorvorrichtung nach einem der Ansprüche 1 bis 14, wobei mindestens ein Magnetfelddetektor mindestens eines aus der Gruppe umfasst, die besteht aus: einer Spule mit einer Spulenachse, die im Wesentlichen parallel zu einer hin und her gehenden Richtung des sich hin und her bewegenden Objekts verläuft; einer Spule mit einer Spulenachse, die im Wesentlichen senkrecht zu einer hin und her gehenden Richtung des sich hin und her bewegenden Objekts verläuft; einer Halleffektsonde; einem Riesenmagnetresonanz-Magnetfeldsensor; und einem Magnetresonanz-Magnetfeldsensor.

16. Positionssensorvorrichtung nach Anspruch 15, wobei die mehreren magnetisch codierten Regionen auf dem sich hin und her bewegenden Objekt (101) in konstanten Entfernungen voneinander angeordnet sind.

17. Positionssensorvorrichtung nach Anspruch 15, wobei die mehreren magnetisch codierten Regionen auf dem sich hin und her bewegenden Objekt (101) in verschiedenen Entfernungen voneinander angeordnet sind.

18. Positionssensorvorrichtung nach Anspruch 17, wobei die verschiedenen Entfernungen anhand einer linearen Funktion, einer logarithmischen Funktion oder einer Potenzfunktion ausgewählt sind.

19. Positionssensorvorrichtung nach einem der Ansprüche 16 bis 18, wobei die mehreren magnetisch codierten Regionen auf dem sich hin und her bewegenden Objekt (101) mit konstanten Abmessungen angeordnet sind.

20. Positionssensorvorrichtung nach einem der Ansprüche 16 bis 18, wobei die mehreren magnetisch codierten Regionen auf dem sich hin und her bewegenden Objekt (101) mit verschiedenen Abmessungen angeordnet sind.

21. Positionssensorvorrichtung nach einem der Ansprüche 16 bis 20, wobei verschiedene magnetisch codierte Regionen aus verschiedenen magnetischen Materialien bereitgestellt sind.

22. Positionssensorvorrichtung nach einem der Ansprüche 16 bis 21, wobei verschiedene magnetisch codierte Regionen mit verschiedenen Magnetisierungswerten versehen sind.

23. Positionssensorvorrichtung nach einem der Ansprüche 1 bis 22, wobei die mehreren Magnetfelddetektoren entlang des sich hin und her bewegenden Objekts (101) in konstanten Entfernungen voneinander angeordnet sind.

24. Positionssensorvorrichtung nach einem der Ansprüche 1 bis 22, wobei die mehreren Magnetfelddetektoren entlang des sich hin und her bewegenden Objekts (101) in verschiedenen Entfernungen voneinander angeordnet sind.

25. Positionssensorvorrichtung nach Anspruch 24, wobei die verschiedenen Entfernungen anhand einer linearen Funktion, einer logarithmischen Funktion oder einer Potenzfunktion ausgewählt sind.

26. Positionssensorvorrichtung nach einem der Ansprüche 1 bis 25, wobei die Anordnung der mehreren magnetisch codierten Regionen entlang des sich hin und her bewegenden Objekts (101) der Anordnung der mehreren Magnetfelddetektoren (203, 204, 205) entspricht.

27. Positionssensorvorrichtung nach einem der Ansprüche 1 bis 26, wobei die Anzahl der magnetisch codierten Regionen gleich der Anzahl von Magnetfelddetektoren (203, 204, 205) ist.

28. Positionssensorvorrichtung nach einem der Ansprüche 1 bis 26, wobei die Anzahl der magnetisch codierten Regionen sich von der Anzahl von Magnetfelddetektoren unterscheidet.

29. Positionssensorvorrichtung nach einem der Ansprüche 1 bis 28, wobei das sich hin und her bewegende Objekt (101) eine Zug-Schub-Stange in einem Getriebe eines Fahrzeugs ist.

30. Positionssensoranordnung, die ein sich hin und her bewegendes Objekt und eine Positionssensorvorrichtung nach einem der Ansprüche 1 bis 29 zum Bestimmen einer Position des sich hin und her bewegenden Objekts (101) umfasst.

31. Positionssensoranordnung nach Anspruch 30, wobei das sich hin und her bewegende Objekt (101) eine Welle ist.

32. Positionssensoranordnung nach einem der Ansprüche 30 bis 31, wobei das sich hin und her bewegende Objekt (101) in mehrere gleichmäßig voneinander beabstandete Segmente unterteilt ist, wobei jedes Segment eine magnetisch codierte Region umfasst, wobei die magnetisch codierten Regionen der Segmente in einer asymmetrischen Weise angeordnet sind.

33. Positionssensoranordnung nach einem der Ansprüche 30 bis 32, die des Weiteren eine Steuereinheit umfasst, die dafür geeignet ist, die hin und her gehende Bewegung des sich hin und her bewegenden Objekts anhand der Position des sich hin und her bewegenden Objekts, die durch die Positionssensorvorrichtung an die Steuereinheit übermittelt wird, zu steuern.

34. Betonverarbeitungsvorrichtung, die Folgendes umfasst: eine Betonverarbeitungskammer; eine sich hin und her bewegende Welle (101), die in der Betonverarbeitungskammer angeordnet und dafür geeignet ist, sich hin und her zu bewegen, um Beton zu mischen; und eine Positionssensorvorrichtung nach einem der Ansprüche 1 bis 29, die dafür geeignet ist, eine Position der sich hin und her bewegenden Welle (101) zu bestimmen.

35. Betonverarbeitungsvorrichtung nach Anspruch 34, die des Weiteren eine Steuereinheit umfasst, die dafür geeignet ist, die hin und her gehende Bewegung der sich hin und her bewegenden Welle (101) anhand der Position der sich hin und her bewegenden Welle (101), die durch die Positionssensorvorrichtung an die Steuereinheit übermittelt wird, zu steuern.

36. Betonverarbeitungsvorrichtung nach Anspruch 34 oder 35, die des Weiteren ein Fahrzeug umfasst, auf dem die Betonverarbeitungskammer, die sich hin und her bewegende Welle (101) und die Positionssensorvorrichtung montiert sind.

37. Betonverarbeitungsvorrichtung nach einem der Ansprüche 34 bis 36, die eine weitere sich hin und her bewegende Welle umfasst, die in der Betonverarbeitungskammer angeordnet und dafür geeignet ist, sich hin und her zu bewegen, um Beton zu mischen; wobei sich die sich hin und her bewegende Welle und die weitere sich hin und her bewegende Welle gegenläufig zueinander bewegen.

38. Verfahren zum Bestimmen einer Position eines sich hin und her bewegenden Objekts, das folgende Schritte umfasst: Detektieren eines Signals durch mehrere Magnetfelddetektoren (203, 204, 205), wobei das Signal durch mehrere magnetisch codierte Regionen erzeugt wird, die an einem sich hin und her bewegenden Objekt fixiert sind, wobei mindestens ein Teil der mehreren Magnetfelddetektoren (104) von einer Anordnung einer entsprechenden der mehreren magnetisch codierten Regionen, die entlang des sich hin und her bewegenden Objekts (101) angeordnet sind, versetzt angeordnet sind, so dass Detektionssignale verschiedener Detektoren (104) relativ zueinander zeitverschoben sind, wenn die magnetisch codierte Region, die sich mit dem sich hin und her bewegenden Objekt (101) hin und her bewegt, einen umgebenden Bereich eines Magnetfelddetektors passiert; und Bestimmen einer Position eines sich hin und her bewegenden Objekts (101) anhand des detektierten Signals.

## Revendications

1. Dispositif de détection de position pour déterminer une position d'un objet en va-et-vient (101), comportant : une pluralité de régions codées magnétiquement (301, 501) fixées sur un objet en va-et-vient (101), une pluralité de détecteurs de champ magnétique (104), au moins une partie de la pluralité de détecteurs de champ magnétique (104) étant agencée de manière déplacée par rapport à un agencement d'une région correspondante parmi la pluralité de régions codées magnétiquement agencées le long de l'objet en va-et-vient (101), de sorte que des signaux de détection de différents détecteurs (104) sont décalés temporellement de manière opportune les uns par rapport aux autres, une unité de détermination de position (106), dans lequel les détecteurs de champ magnétique (104) sont adaptés pour détecter un signal généré par les régions codées magnétiquement (301, 501) lorsque les régions codées magnétiquement (301, 501) effectuant un mouvement en va-et-vient avec l'objet en va-et-vient (101) traversent une région environnante des détecteurs de champ magnétique (104), dans lequel l'unité de détermination de position (106) est adaptée pour déterminer une position d'un objet en va-et-vient (101) sur la base du signal magnétique détecté.

2. Dispositif de détection de position selon la revendication 1, dans lequel chaque région codée magnétiquement (301, 501) est une région magnétique permanente.

3. Dispositif de détection de position selon la revendication 1 ou 2, dans lequel chaque région codée magnétiquement (301, 501) est une région magnétisée longitudinalement de l'objet en va-et-vient.

4. Dispositif de détection de position selon la revendication 1 ou 2, dans lequel chaque région codée magnétiquement (301, 501) est une région magnétisée circonférentiellement de l'objet en va-et-vient.

5. Dispositif de détection de position selon l'une quelconque des revendications 1, 2 ou 4, dans lequel chaque région codée magnétiquement (301, 501) est formée par une première région de flux magnétique orientée dans une première direction et par une seconde région de flux magnétique orientée dans une seconde direction, la première direction étant opposée à la seconde direction.

6. Dispositif de détection de position selon la revendication 5, dans lequel, dans une vue en coupe de l'objet en va-et-vient (101), le premier flux magnétique circulaire a la première direction et un premier rayon et le second flux magnétique circulaire a la seconde direction et un second rayon, le premier rayon étant plus grand que le second rayon.

7. Dispositif de détection de position selon la revendication 1, dans lequel chaque région codée magnétiquement (301, 501) est fabriquée conformément aux étapes de fabrication suivantes consistant à : appliquer une première impulsion de courant à un élément magnétisable, la première impulsion de courant étant appliquée de sorte qu'il existe une première circulation de courant dans une première direction le long d'un axe longitudinal de l'élément magnétisable, dans lequel la première impulsion de courant est telle que l'application de l'impulsion de courant génère une région codée magnétiquement dans l'élément magnétisable.

8. Dispositif de détection de position selon la revendication 7, dans lequel une seconde impulsion de courant est appliquée à l'élément magnétisable, dans lequel la seconde impulsion de courant est appliquée de sorte qu'il existe une seconde circulation de courant dans une seconde direction le long de l'axe longitudinal de l'élément magnétisable.

9. Dispositif de détection de position selon la revendication 8, dans lequel chacune des première et seconde impulsions de courant a un front de montée et un front de descente, dans lequel le front de montée est plus raide que le front de descente.

10. Dispositif de détection de position selon la revendication 8 ou 9, dans lequel la première direction est opposée à la seconde direction.

11. Dispositif de détection de position selon l'une quelconque des revendications 7 à 10, dans lequel l'élément magnétisable a une surface circonférentielle entourant une région centrale de l'élément magnétisable, dans lequel la première impulsion de courant est introduite dans l'élément magnétisable à un premier emplacement au niveau de la surface circonférentielle de sorte que la première circulation de courant est dans la première direction de la région centrale de l'élément magnétisable, et dans lequel la première impulsion de courant est déchargée de l'élément magnétisable à un second emplacement au niveau de la surface circonférentielle, dans lequel le second emplacement est à une distance dans la première direction du premier emplacement.

12. Dispositif de détection de position selon l'une quelconque des revendications 8 à 11, dans lequel la seconde impulsion de courant est introduite dans l'élément magnétisable au second emplacement au niveau de la surface circonférentielle de sorte que la seconde circulation de courant est dans la seconde direction de la région centrale de l'élément magnétisable, et dans lequel la seconde impulsion de courant est déchargée de l'élément magnétisable au premier emplacement au niveau de la surface circonférentielle.

13. Dispositif de détection de position selon l'une des revendications 7 à 12, dans lequel la première impulsion de courant n'est pas appliquée à l'élément magnétisable au niveau d'une phase d'extrémité de l'élément magnétisable.

14. Dispositif de détection de position selon l'une quelconque des revendications 1 à 13, dans lequel chaque région codée magnétiquement (301, 501) est un élément magnétique fixé à la surface de l'objet en va-et-vient (101).

15. Dispositif de détection de position selon l'une quelconque des revendications 1 à 14, dans lequel au moins un détecteur de champ magnétique comporte au moins l'un parmi le groupe constitué d'une bobine ayant un axe de bobine orienté principalement parallèlement à une direction en va-et-vient de l'objet en va-et-vient, une bobine ayant un axe de bobine orienté principalement perpendiculairement à une direction en va-et-vient de l'objet en va-et-vient, une sonde à effet de Hall, un détecteur de champ magnétique à Résonance Magnétique Géante, et un détecteur de champ magnétique à Résonance Magnétique.

16. Dispositif de détection de position selon la revendication 15, dans lequel la pluralité de régions codées magnétiquement sont agencées sur l'objet en va-et-vient (101) à des distances constantes les unes des autres.

17. Dispositif de détection de position selon la revendication 15, dans lequel la pluralité de régions codées magnétiquement sont agencées sur l'objet en va-et-vient (101) à des distances différentes les unes des autres.

18. Dispositif de détection de position selon la revendication 17, dans lequel les différentes distances sont sélectionnées sur la base d'une fonction linéaire, d'une fonction logarithmique ou d'une fonction de puissance.

19. Dispositif de détection de position selon l'une quelconque des revendications 16 à 18, dans lequel la pluralité de régions codées magnétiquement sont agencées sur l'objet en va-et-vient (101) avec des dimensions constantes.

20. Dispositif de détection de position selon l'une quelconque des revendications 16 à 18, dans lequel la pluralité de régions codées magnétiquement sont agencées sur l'objet en va-et-vient (101) avec des dimensions différentes.

21. Dispositif de détection de position selon l'une quelconque des revendications 16 à 20, dans lequel différentes régions codées magnétiquement sont constituées de matériaux différents.

22. Dispositif de détection de position selon l'une quelconque des revendications 16 à 21, dans lequel à différentes régions codées magnétiquement sont attribuées différentes valeurs de magnétisation.

23. Dispositif de détection de position selon l'une quelconque des revendications 1 à 22, dans lequel la pluralité de détecteurs de champ magnétique sont agencés le long de l'objet en va-et-vient (101) à des distances constantes les uns des autres.

24. Dispositif de détection de position selon l'une quelconque des revendications 1 à 22, dans lequel la pluralité de détecteurs de champ magnétique sont agencés le long de l'objet en va-et-vient (101) à des distances différentes les uns des autres.

25. Dispositif de détection de position selon la revendication 24, dans lequel les différentes distances sont sélectionnées sur la base d'une fonction linéaire, d'une fonction logarithmique ou d'une fonction de puissance.

26. Dispositif de détection de position selon l'une quelconque des revendications 1 à 25, dans lequel l'agencement de la pluralité de régions codées magnétiquement le long de l'objet en va-et-vient (101) correspond à l'agencement de la pluralité de détecteurs de champ magnétique (203, 204, 205).

27. Dispositif de détection de position selon l'une quelconque des revendications 1 à 26, dans lequel le nombre de régions codées magnétiquement est égal au nombre de détecteurs de champ magnétique (203, 204, 205).

28. Dispositif de détection de position selon l'une quelconque des revendications 1 à 26, dans lequel le nombre des régions codées magnétiquement diffère du nombre de détecteurs de champ magnétique.

29. Dispositif de détection de position selon l'une quelconque des revendications 1 à 28, dans lequel l'objet en va-et-vient (101) est une tige de poussée-traction dans une boîte de vitesses d'un véhicule.

30. Réseau de détecteurs de position, comportant un objet en va-et-vient, et un dispositif de détection de position selon l'une quelconque des revendications 1 à 29 pour déterminer une position de l'objet en va-et-vient (101).

31. Réseau de détecteurs de position selon la revendication 30, dans lequel l'objet en va-et-vient (101) est un arbre.

32. Réseau de détecteurs de position selon l'une quelconque des revendications 30 à 31, dans lequel l'objet en va-et-vient (101) est divisé en une pluralité de segments espacés de manière égale, chaque segment comportant une région codée magnétiquement, les régions codées magnétiquement des segments étant agencées d'une manière asymétrique.

33. Réseau de détecteurs de position selon l'une quelconque des revendications 30 à 32, comportant en outre une unité de commande adaptée pour commander le va-et-vient de l'objet en va-et-vient sur la base de la position de l'objet en va-et-vient qui est agencé dans l'unité de commande par l'intermédiaire du dispositif de détection de position.

34. Dispositif de mise en oeuvre du béton comportant une chambre de mise en oeuvre du béton, un arbre en va-et-vient (101) agencé dans la chambre de mise en oeuvre du béton adapté pour effectuer un mouvement en va-et-vient afin de malaxer le béton, et un dispositif de détection de position selon l'une quelconque des revendications 1 à 29 adapté pour déterminer une position de l'arbre en va-et-vient (101).

35. Dispositif de mise en oeuvre du béton selon la revendication 34, comportant en outre une unité de commande adaptée pour commander le va-et-vient de l'arbre en va-et-vient (101) sur la base de la position de l'arbre en va-et-vient (101) qui est agencé dans l'unité de commande par l'intermédiaire du dispositif de détection de position.

36. Dispositif de mise en oeuvre du béton selon la revendication 34 ou 35, comportant en outre un véhicule sur lequel la chambre de mise en oeuvre du béton, l'arbre en va-et-vient (101) et le dispositif de détection de position sont montés.

37. Dispositif de mise en oeuvre du béton selon l'une quelconque des revendications 34 à 36, comportant un arbre en va-et-vient supplémentaire agencé dans la chambre de mise en oeuvre du béton adapté pour effectuer un mouvement en va-et-vient afin de malaxer le béton, dans lequel l'arbre en va-et-vient et l'arbre en va-et-vient supplémentaire sont opérationnels dans une manière anticyclique.

38. Procédé pour déterminer une position d'un objet en va-et-vient, comportant les étapes consistant à détecter un signal par l'intermédiaire d'une pluralité de détecteurs de champ magnétique (203, 204, 205), le signal étant généré par une pluralité de régions codées magnétiquement fixées sur un objet en va-et-vient, dans lequel au moins une partie de la pluralité de détecteurs de champ magnétique (104) étant agencée de manière déplacée par rapport à un agencement d'une région correspondante parmi la pluralité de régions codées magnétiquement agencées le long de l'objet en va-et-vient (101), de sorte que des signaux de détection de différents détecteurs (104) sont décalés temporellement de manière opportune les uns par rapport aux autres lorsque les régions codées magnétiquement effectuant un mouvement en va-et-vient avec l'objet en va-et-vient (101) traversent une zone environnante d'un détecteur de champ magnétique, déterminer une position d'un objet en va-et-vient (101) sur la base du signal détecté.
